# EUROPEAN PATENT SPECIFICATION

(11) **EP 0 922 534 B1**
(45) Date of publication and mention of the grant of the patent: **26.01.2005**
(21) Application number: 98309556.3
(22) Date of filing: 23.11.1998
(51) Int. Cl.: B24B 57/02, B24B 37/04, H01L 21/304

(54) **Slurry mixing apparatus and method**
Aufschlämmung-Mischvorrichtung und Verfahren
Procédé et dispositif de mélange de suspension de polissage

(30) Priority: 26.11.1997 US 978887
(43) Date of publication of application: 16.06.1999
(73) Proprietor: THE BOC GROUP, INC., Murray Hill, New Providence, New Jersey 07974-2082 (US)
(72) Inventor: Pozniak, Peter M, San Jose, California 95129 (US); Trang, Duy Khanh, San Jose, California 95131 (US); Roberts, Benjamin R, Los Altos, California 94022 (US)
(74) Representative: Bousfield, Roger James

(56) References cited:
- WO-A-96/02319

## Description

This invention provides an apparatus and method for producing a slurry from a slurry concentrate in which the slurry concentrate, de-ionised water and an oxidiser are pumped into a junction to produce the slurry. More particularly, the invention relates to such an apparatus and method in which the homogeneity of the slurry is enhanced by passing the slurry through a mixing device and recirculating part of the finished slurry back to the junction.

Slurries are used in a variety of surface treatment techniques. An important surface treatment, used in the manufacture of semiconductor devices, is chemical mechanical polishing or planarisation. Typically, slurries used in such surface treatment comprise potassium hydroxide, silicon oxide, an oxidiser such as hydrogen peroxide, and a diluent such as de-ionised water. Ferric nitrate or chloride might also be present. The oxidiser contained within the slurry acts on the surface to be treated and the abrasive particles sweep the surface layer away. Slurries are often shipped to a site as a slurry concentrate that contains, for instance, the potassium hydroxide and silicon dioxide. The diluent and oxidiser are then added to the concentrate at the site or in some instances at the tool itself.

There are however, many difficulties involved in the mixing of the slurry and the handling of the finished slurry, once mixed. One major problem is that the slurry has a very limited pot life and as such, there exists only a limited amount of time to use the slurry after having been mixed. Additionally, slurries such as those used in the semiconductor industry do not remain homogenous upon being subjected to shear forces. For instance, shear induced in the slurry due to sharp pipe bends will produce agglomeration which will destroy the usefulness of the slurry in the semiconductor manufacturing process.

Because of such problems, slurry delivery and mixing systems have been proposed in which the slurry is mixed on site from the slurry concentrate. An example of such a system is disclosed in US Patent specification No. 5,407,526. In this patent, the slurry concentrate and oxidant are pumped into a mixing chamber where they are mixed to form the finished slurry. The slurry is then immediately deposited onto the semiconductor so that it can be worked by the polishing tool. Another slurry mixing system is disclosed in US Patent specification No. 5,478,435 in which slurries are pumped directly onto a polishing pad of a chemical mechanical planarisation tool.

In each of the foregoing US patents, the mixing of the slurry from the slurry concentrate can only occur when the polishing tool is in operation. The invention provides an apparatus and method in which the slurry is mixed at a location that is remote from the polishing tool to allow for distribution of the slurry to several tools, each of which do not have to be operating. Furthermore, the invention allows for greater control over the consistency and makeup of the slurry than is possible in either of the foregoing US patents.

WO 96/02319 describes an apparatus for mixing, itering and delivering slurry chemicals for use in manufacturing operations.

In accordance with the invention, there is provided an apparatus for producing a slurry from a slurry concentrate, the apparatus comprising first, second, and third inlet pumps for pumping the slurry concentrate, de-ionised water, and an oxidiser, respectively; a flow network having a dispense leg and a recycle leg for dividing a stream of the slurry in to a dispense stream and a recycle stream respectively; a junction connected to the first, second, and third pumps and the recycle leg of the flow network so that the slurry concentrate, the de-ionised water, the oxidiser and the recycle stream are brought into contact with one another to form a mixture; at least one mixing device connected to the junction to promote homogeneity of the mixture and thereby to form the slurry; and an outlet pump connected to the at least one mixing device to pump the slurry from the at least one mixing device; the flow network being connected to the outlet pump, the recycle leg having a pressure reduction valve for reducing the dispense pressure to a pressure imparted to the slurry concentrate, the de-ionised water, and the oxidiser by the first, second, and third inlet pumps.

In another aspect, the invention provides a method for producing a slurry from a slurry concentrate, the method comprising: pumping the slurry concentrate, de-ionised water, and an oxidiser to form three pumped streams having a pressure imparted by the pumping; bringing the three pumped streams into contact with one another and a recycle stream to form a mixture; promoting homogeneity within the mixture to form the slurry; pumping the slurry to a dispense pressure; dividing the slurry into a dispense stream and the recycle stream; and reducing the dispense pressure of the recycle stream to the pressure prior to combining the recycle stream with the three pumped streams.

Although the slurry is formed on-site and upon demand, the polishing or other equipment utilising the slurry does not have to be in operation during the mixing of the slurry. Moreover, there exists a greater degree of control over the consistency of the slurry due to promotion of homogeneity with mixing devices as well as the recycle of finished slurry.

For a better understanding of the invention, reference will now be made, by way of exemplification only, to the accompanying drawings in which:
Figure 1 is a schematic view of an apparatus for carrying out a method in accordance with the invention; and
Figure 2 is a sectional view of a mixing device used in Figure 1.

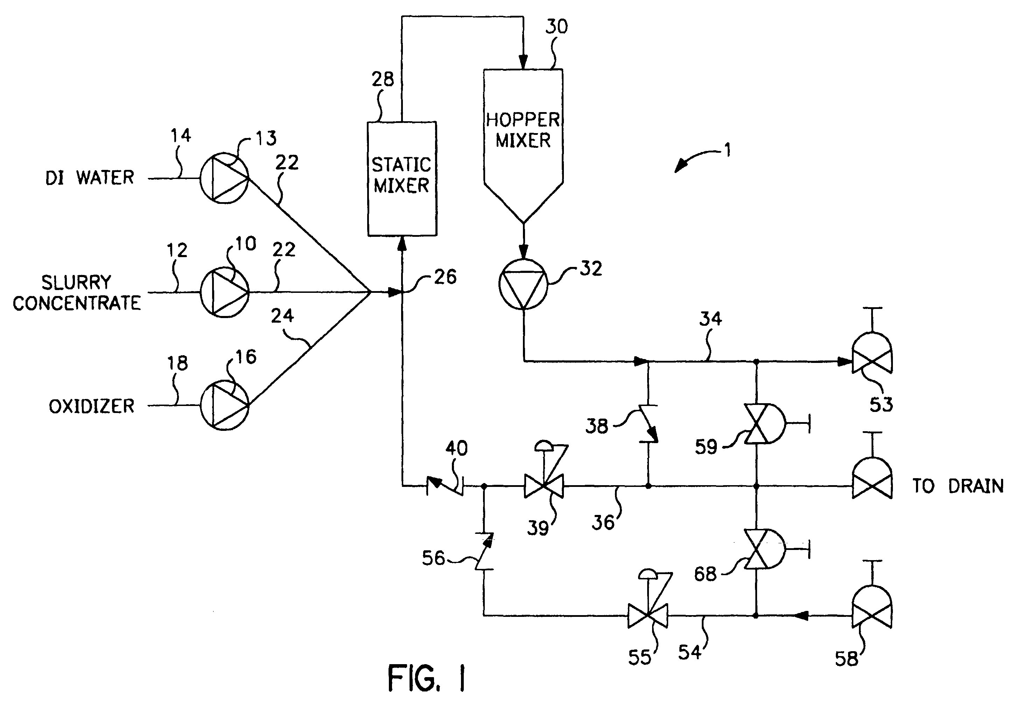

With reference to Figure 1, there is shown an apparatus 1 for producing a slurry in accordance with the invention. It can be a stand-alone unit or used in conjunction with a known distribution apparatus to feed slurry under pressure to one or more points of use.

A first pump 10 is provided for pumping a stream 12 of a slurry concentrate. A second pump 13 is provided for pumping a stream 14 of de-ionised water and a third pump 16 is provided for pumping a stream 18 of oxidiser. The first, second, and third pumps 10, 13, and 16 are preferably peristaltic pumps. Furthermore, it is preferable that the first, second and third pumps 10, 13 and 16 are variable speed pumps so that the ratio of the constituents to be pumped can be adjusted. Other types of adjustment are possible, for instance, a fixed adjustment could be effected by providing pumps of differing capacities. In any embodiment, the pipes carrying streams 20, 22, and 24 should generally be of equal length so that the desired flows can easily be adjusted over time without causing temporal shifts in the mix ratios.

The three pumped streams, 20, 22 and 24 are fed into a junction 26. As the first, second, and third, pumps 10, 13, and 16. are operating at different speeds and there is some flow pulsation produced by each pump, a series of regions are produced within the stream leaving the junction 26 that are richer in one component than another component. A recycle stream which is made up of the finished slurry also feeds the junction 26.

The slurry then passes through a known static mixer 28. The static mixer 28 is packed to drive mixed slurry outward and thus promote homogeneity in a direction radial to the direction of flow. The now radially, uniform slurry passes into a hopper mixer 30 which promotes homogeneity of the slurry stream in the direction of flow. An output pump 32 is connected to the mixer 30 to pump the slurry to a delivery pressure. An embodiment of the present invention is possible that does not incorporate the static mixer 28. In such embodiment, slight changes in slurry makeup, taken in a radial direction to the slurry flow would be tolerated.

The slurry then passes to a flow network connected to the outlet pump 32. The flow network has a dispense leg 34 and a recycle leg 36. Preferably, the flow network should be designed, through appropriate pipe sizing in particular, such that about 50% of the slurry entering the dispense leg 34 recycles within the recycle leg 36.

Higher or lower recycle rates are possible depending on the intended slurry composition. A check valve 38 is provided to prevent the recycle stream from flowing back towards the dispense leg 34. A pressure regulating valve 39 is provided to reduce the pressure of the recycle stream from the dispense pressure to the pressure imparted by the first, second, and third pumps 10, 13, and 16. The recycle leg 36 is connected to junction 26 and can be joined by a return leg 54. A check valve 40 may be provided within the recycle leg 36 to prevent back flow.

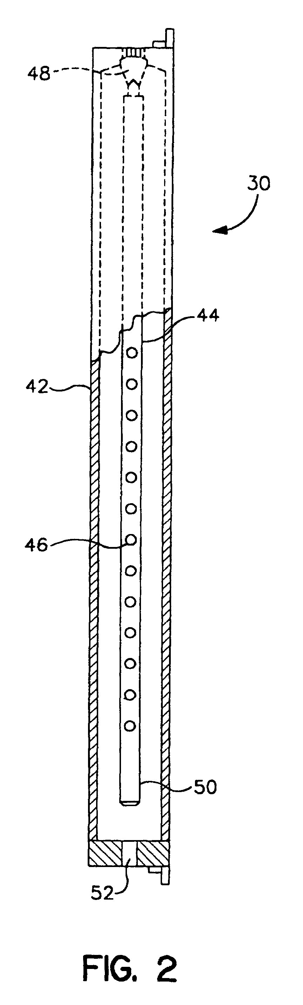

With additional reference to Figure 2, the hopper mixer 30 is provided with a hopper 42 and a coaxial pipe 44 located within the hopper 42. The coaxial pipe 44 is provided with openings 46 in sets of four openings preferably spaced 90 degrees apart so that the slurry escapes from the pipe 44 in four orthogonal directions into the hopper 42. The pipe 44 is open at one end 48 to receive slurry and is closed at an end 50. The slurry thus mixes with itself in a longitudinal direction within the hopper 42 and thus, parallel relative to its direction of flow. The slurry is discharged from a bottom opening 52 located in the bottom of the hopper 42. Other inline mixing devices are possible.

The slurry passes out of the dispense leg 34 and through a valve 53 which can be used to isolate the slurry tool from the flow network. After the tool, the slurry returns through return leg 54. The pressure of such return is reduced by use of a pressure regulation valve 55. A check valve 56 can be provided to prevent back flow. Returning slurry (or more appropriately termed, unused slurry) joins the return leg 54 and is thus also fed to the junction 26.

The return leg 54 can be isolated from the slurry tool by a valve 58. If both the valves 53 and 58 are shut, valves 59 and 68 can be opened to allow the system to be flushed with deionized water for cleaning purposes. Therefore during operation of the apparatus 1, the valves 53 and 58 are set in an open position and valves 59 and 68 are set in a closed position. An isolation valve 70 can be provided to isolate the drain from the flow network during the cleaning thereof.

## Claims

1. Apparatus for producing a slurry from a slurry concentrate, the apparatus comprising:
first (10) second (13), and third (16) inlet pumps for pumping the slurry concentrate, de-ionised water, and an oxidiser, respectively;
a flow network having a dispense leg (34) and a recycle leg (36) for dividing a stream of the slurry in to a dispense stream and a recycle stream respectively;
a junction (26) connected to the first, second, and third pumps and the recycle leg of the flow network so that the slurry concentrate, the de-ionised water, the oxidiser and the recycle stream are brought into contact with one another to form a mixture;
at least one mixing device (28, 30) connected to the junction to promote homogeneity of the mixture and thereby to form the slurry; and
an outlet pump (32) connected to the at least one mixing device to pump the slurry from the at least one mixing device;
the flow network being connected to the outlet pump, the recycle leg having a pressure reduction valve (39) for reducing the dispense pressure to a pressure imparted to the slurry concentrate, the de-ionised water, and the oxidiser by the first, second, and third inlet pumps.

2. Apparatus according to Claim 1 in which the at least one mixing device comprises:
a hopper (42) having a vertically oriented pipe (44) having perforations (46) from which the mixture escapes into the hopper;
the hopper having a bottom outlet (52) connected to the outlet pump.

3. Apparatus according to Claim 1 or Claim 2 in which the at least one mixing device further comprises a static mixer (28).

4. Apparatus according to any preceding claim in which the flow network further has a return leg (54) connected to the junction for feeding unused slurry back to the at least one mixing device, the return leg having another pressure regulating valve for reducing the dispense pressure back to the pressure imparted to the slurry concentrate, the de-ionised water, the oxidiser by the first, second, and third inlet pumps.

5. Apparatus according to any preceding claim in which the pumps are variable speed pumps.

6. A method for producing a slurry from a slurry concentrate, the method comprising:
pumping the slurry concentrate, de-ionised water, and an oxidiser to form three pumped stream having a pressure imparted by the pumping;
bringing the three pumped streams into contact with one another and a recycle stream to form a mixture;
promoting homogeneity within the mixture to form the slurry;
pumping the slurry to a dispense pressure;
dividing the slurry into a dispense stream and the recycle stream; and
reducing the dispense pressure of the recycle stream to the pressure prior to combining the recycle stream with the three pumped streams.

7. A method according to Claim 6 in which homogeneity is promoted by introducing the mixture into a static mixer (28) feeding a vertically oriented pipe (44) contained with a hopper (42), the pipe having perforations (46) from which the mixture escapes into the hopper.

8. A method according to Claim 6 or Claim 7 further comprising introducing unused slurry into the mixture.

9. A method according to any one of Claims 6 to 8 in which pumping speed is adjusted to control proportions of the slurry concentrate, the de-ionised water, and the oxidiser.

## Patentansprüche

1. Einrichtung zur Erzeugung einer Schlämme aus einem Schlammkonzentrat, wobei die Einrichtung umfasst:
eine erste (10), zweite (13) und dritte (16) Einlasspumpe zum Pumpen des Schlammkonzentrats bzw. von deionisiertem Wasser bzw. eines Oxidierers,
ein Strömungsneztwerk mit einem Abgabezweig (24) und einem Rezirkulationszweig (36) zum Aufteilen eines Stroms der Schlämme in einen Abgabestrom und einen Rezirkulationsstrom,
eine an die erste, zweite und dritte Pumpe und den Rezirkulationszweig des Strömungsnetzwerks angeschlossene Verbindung (26), so daß das Schlammkonzentrat, das deionisierte Wasser, der Oxidierer und der Rezirkulationsstrom miteinander in Berührung gebracht werden, um ein Gemisch zu bilden,
mindestens eine an die Verbindung angeschlossene Mischeinrichtung (28, 30) zur Begünstigung der Homogenität des Gemischs und dadurch zur Bildung der Schlämme, und
eine Auslasspumpe (32), die mit der mindestens einen Mischeinrichtung verbunden ist, um die Schlämme von der mindestens einen Mischeinrichtung wegzupumpen,
wobei das Strömungsnetzwerk mit der Auslasspumpe verbunden ist und der Rezirkulationszweig ein Druckminderventil (39) zum Absenken des Abgabedrucks auf einen dem Schlammkonzentrat, dem deionisierten Wasser und dem Oxidierer durch die erste, zweite und dritte Einlasspumpe mitgeteilten Druck enthält.

2. Einrichtung nach Anspruch 1, wobei die mindestens eine Mischeinrichtung umfasst:
einen Trichter (42) mit einem vertikal orientierten Rohr (44) mit Perforationen (46), aus welcher das Gemisch in den Trichter austritt,
wobei der Trichter einen Bodenauslaß (52) aufweist, der mit der Auslasspumpe verbunden ist.

3. Einrichtung nach Anspruch 1 oder Anspruch 2, wobei die mindestens eine Mischeinrichtung weiter einen statischen Mischer (29) enthält.

4. Einrichtung nach einem der vorhergehenden Ansprüche, wobei das Strömungsnetzwerk des weiteren einen Rückführungszwei (54) aufweist, der an die Verbindung angeschlossen ist, um unbenutzte Schlämme zurück in die mindestens eine Mischeinrichtung zu führen, wobei der Rückführungszweig ein weiteres Druckregulierventil zum Absenken des Abgabedrucks zurück auf den dem Schlammkonzentrat, dem deionisierten Wasser, und dem Oxidierer durch die erste, zweite und dritte Einlasspumpe mitgeteilten Druck enthält.

5. Einrichtung nach einem der vorhergehenden Ansprüche, wobei die Pumpen drehzahlveränderliche Pumpen sind.

6. Verfahren zum Erzeugen einer Schlämme aus einem Schlammkonzentrat, wobei das Verfahren umfasst:
Pumpen des Schlammkonzentrats, von deionisiertem Wasser und eines Oxidierers zur Bildung von drei gepumpten Strömen mit einem durch das Pumpen mitgeteilten Druck,
Zusammenbringen der drei gepumpten Ströme in Berührung miteinander und mit einem Rezirkulationsstrom zur Bildung eines Gemischs,
Begünstigen der Homogenität innerhalb des Gemischs zur Bildung der Schlämme, Pumpen der Schlämme auf einen Abgabedruck,
Aufteilen der Schlämme in einen Abgabestrom und den Rezirkulationsstrom, und
Absenken des Abgabedrucks des Rezirkulationsstroms auf den Druck vor dem Kombinieren des Rezirkulationsstroms mit dem drei gepumpten Strömen.

7. Verfahren nach Anspruch 6, wobei die Homogenität durch Einleiten des Gemischs in einen statischen Mischer (28) begünstigt wird, der ein in einen Trichter (42) enthaltenes vertikal orientiertes Rohr (44) speist, wobei das Rohr Perforationen (46) hat, aus denen das Gemisch in den Trichter austritt.

8. Verfahren nach Anspruch 6 oder Anspruch 7, das weiter das Einleiten unbenutzter Schlämme in das Gemisch umfasst.

9. Verfahren nach einem der Ansprüche 6 bis 8, wobei die Pumpendrehzahl zur Steuerung der Anteile des Schlammkonzentrats, des deionisierten Wassers und des Oxidierers eingestellt wird.

## Revendications

1. Dispositif pour la production d'une suspension à partir d'une suspension concentrée, le dispositif comprenant :
une première (10), une deuxième (13) et une troisième (16) pompes d'admission pour aspirer respectivement la suspension concentrée, de l'eau désionisée et un agent d'oxydation ;
un réseau d'écoulement ayant une branche (34) de distribution et une branche (36) de recyclage, de manière à diviser un flux de la suspension respectivement en un flux de distribution et un flux de recyclage ;
une jonction (26) reliée aux première, deuxième et troisième pompes et à la branche de recyclage du réseau d'écoulement de telle sorte que la suspension concentrée, l'eau désionisée, l'agent d'oxydation et le flux de recyclage soient amenés en contact les uns avec les autres pour former un mélange ;
au moins un dispositif de mélange (28, 30) relié à la jonction pour favoriser l'homogénéité du mélange et de cette manière former la suspension ; et
une pompe (32) de décharge reliée audit au moins un dispositif de mélange pour aspirer la suspension dudit au moins un dispositif de mélange ;
le réseau d'écoulement étant relié à la pompe de décharge, la branche de recyclage ayant un clapet (39) de réduction de la pression destiné à réduire la pression de distribution jusqu'à une pression impartie à la suspension concentrée, à l'eau désionisée et à l'agent d'oxydation par la première, la deuxième et la troisième pompes d'admission.

2. Dispositif selon la revendication 1, dans lequel ledit au moins un dispositif de mélange comprend :
une trémie (42) ayant un tuyau (44) orienté verticalement muni de perforations (46) par lesquelles le mélange s'échappe dans la trémie;
la trémie ayant un orifice de sortie inférieur (52) relié à la pompe de décharge.

3. Dispositif selon la revendication 1 ou la revendication 2, dans lequel ledit au moins un dispositif de mélange comprend un mélangeur statique (28).

4. Dispositif selon l'une quelconque des revendications précédentes, dans lequel le réseau d'écoulement possède en plus une branche de retour (54) reliée à la jonction pour ramener la suspension inutilisée audit au moins un dispositif de mélange, la branche de retour ayant un autre clapet de réduction de la pression destiné à réduire la pression de distribution pour la ramener à la pression impartie à la suspension concentrée, à l'eau désionisée et à l'agent d'oxydation par la première, la deuxième et la troisième pompes d'admission.

5. Dispositif selon l'une quelconque des revendications précédentes, dans lequel les pompes sont des pompes à vitesse variable.

6. Procédé de production d'une suspension à partir d'une suspension concentrée, le procédé comprenant les étapes consistant à :
pomper la suspension concentrée, l'eau désionisée et un agent d'oxydation pour former trois flux pompés ayant une pression impartie par le pompage ;
amener les trois flux pompés en contact les uns avec les autres et avec un flux de recyclage afin de former un mélange ;
favoriser l'homogénéité dans le mélange pour former la suspension ;
pomper la suspension à une pression de distribution ;
diviser la suspension en un flux de distribution et ledit flux de recyclage ; et
réduire la pression de distribution du flux de recyclage à la pression avant combinaison du flux de recyclage avec les trois flux pompés.

7. Procédé selon la revendication 6, dans lequel l'homogénéité est favorisée par l'introduction du mélange dans un mélangeur statique (28) en alimentant un tuyau (44) orienté verticalement contenu dans une trémie (42), le tuyau ayant des perforations (46) par lesquelles le mélange s'échappe dans la trémie.

8. Procédé selon la revendication 6 ou la revendication 7, comprenant de plus l'introduction de la suspension inutilisée dans le mélange.

9. Procédé selon l'une quelconque des revendications 6 à 8, dans lequel la vitesse de pompage est ajustée de manière à contrôler les proportions de la suspension concentrée, de l'eau désionisée et de l'agent d'oxydation.
